# EUROPÄISCHE PATENTANMELDUNG

(11) **EP 3 026 848 A1**
(43) Veröffentlichungstag der Anmeldung: **01.06.2016**
(21) Anmeldenummer: 14195173.1
(22) Anmeldetag: 27.11.2014
(51) Int. Cl.: H04L 12/46, H04L 12/437

(54) **Verfahren zur Datenübermittlung in einem redundant betreibbaren industriellen Kommunikationsnetz und Koppel-Kommunikationsgerät**

(71) Anmelder: Siemens Aktiengesellschaft, 80333 München (DE)
(72) Erfinder: Weichlein, Thomas, 91052 Erlangen (DE); Strobel, Uwe, 90461 Nürnberg (DE)

(57) **Zusammenfassung**

Zur Datenübermittlung in einem redundant betreibbaren industriellen Kommunikationsnetz weisen zwei einer zweiten Koppel-Verbindung zugeordnete zweite Koppel-Kommunikationsgeräte jeweils eine aktivierte Kopplungssteuerungseinheit auf, die jeweils eine Weiterleitung von Datagrammen mit Nutzdaten vom bzw. an einen Koppel-Anschluss des jeweiligen zweiten Koppel-Kommunikationsgeräts in Abhängigkeit von einer detektierten Unterbrechung zwischen zwei ersten Koppel-Kommunikationsgeräten steuert, die einer ersten Koppel-Verbindung zugeordnet sind. Die beiden zweiten Koppel-Kommunikationsgeräte überwachen die erste Koppel-Verbindung unabhängig voneinander anhand von Verbindungsstatus-Datagrammen der ersten Koppel-Kommunikationsgeräte auf eine Unterbrechung. An Ring-Anschlüssen der beiden zweiten Koppel-Kommunikationsgeräte empfangene Verbindungsstatus-Datagramme werden über die Koppel-Anschlüsse der zweiten Koppel-Kommunikationsgeräte weitergeleitet.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Bei einer Erfassung, Auswertung und Übermittlung von Mess- und Steuerungsdaten ist insbesondere für zeitkritische technische Prozesse sicherzustellen, dass vollständige und unveränderte Daten deterministisch bzw. in Echtzeit bereitgestellt werden. Absichtliche, unabsichtliche oder durch einen technischen Fehler bedingte Veränderungen sind zu vermeiden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Neben einer zusätzliche Auslastung von Kommunikationsverbindungen des industriellen Automatisierungssystems können durch nicht oder nicht vollständig übermittelte Nachrichten auch Ausfälle von kompletten Produktionsanlagen verursacht werden. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy, Parallel Redundancy Protocol oder (Rapid) Spanning Tree Protocol, für hochverfügbare, redundant betreibbare in industriellen Kommunikationsnetze entwickelt worden.

Media Redundancy Protocol (MRP) ist im Standard IEC 62439 definiert und ermöglicht eine Kompensation einzelner Verbindungsausfälle in Netzen mit einfacher Ringtopologie bei stoßbehafteter redundanter Übertragung von Nachrichten. Stoßbehaftete Medienredundanzverfahren lassen sich grundsätzlich mit relativ geringem Aufwand realisieren. Auch PROFINET (IEC 61158 Type 10) referenziert Media Redundancy Protocol als stoßbehaftetes Medienredundanzverfahren innerhalb eines Kommunikationsnetzes mit Ringtopologie.

In EP 1 062 787 B1 ist ein Ethernet-basiertes Kommunikationsnetz mit Redundanzeigenschaften beschrieben, bei dem ein an Linienenden des Kommunikationsnetzes angeschlossener Redundanz-Manager durch Test-Telegramme einen Zustand des Kommunikationsnetzes prüft. Bei einer Netzunterbrechung verbindet der Redundanzmanager die Linienenden und stellt auf diese Weise im Millisekundenbereich einen weiteren Netzbetrieb sicher.

Aus EP 1 476 987 B1 ist ein Ethernet-Kommunikationsnetz mit Redundanzeigenschaften bekannt, in dem mehrere Koppelgeräte und ein als Redundanzmanager betriebenes Koppelgerät in einer Ring-Topologie miteinander verbunden sind. Zur Herstellung einer linienförmigen Topologie trennt der Redundanzmanager die Ring-Topologie auf, falls von ihm ausgesendete Testtelegramme innerhalb eines vorgegebenen Zeitintervalls am jeweils anderen Port empfangen werden. Zumindest ein Koppelgerät wird als Redundanzmanager-Observer betrieben und ermittelt anhand eigener Testtelegramme Unterbrechungen innerhalb der RingTopologie. Zur Herstellung einer linienförmigen Topologie trennt der Redundanzmanager-Observer die Ring-Topologie auf, falls seine Testtelegramme innerhalb eines vorgegebenen Zeitinvervalls am jeweils anderen Port empfangen werden.

EP 1 476 988 B1 betrifft ein Ethernet-Kommunikationsnetz mit Redundanzeigenschaften, in dem mehrere Koppelgeräte und ein als Redundanzmanager betriebenes Koppelgerät in einer Ring-Topologie miteinander verbunden sind. Zur Herstellung einer linienförmigen Topologie trennt der Redundanzmanager die Ring-Topologie auf, falls von ihm ausgesendete Testtelegramme innerhalb eines vorgegebenen Zeitintervalls am jeweils anderen Port empfangen werden. Zumindest ein Koppelgerät wird als Redundanzmanager-Observer betrieben und wertet Telegramme aus, die es an seinem mit dem Redundanzmanager verbundenen Port empfängt. In Abhängigkeit von einem Auswertungsergebnis trennt der Redundanzmanager-Observer die Ring-Topologie zur Herstellung einer linienförmigen Topologie auf und signalisiert einen Fehler, wenn ein in einem Testtelegramm angegebener Topologie-Zustand in Widerspruch zu einem durch den Redundanzmanager-Observer ermittelten Topologie-Zustand steht.

In EP 1 955 480 B1 ist ein Ethernet-Kommunikationsnetz mit Redundanzeigenschaften beschrieben, bei dem zumindest zwei Netzsegmente mit jeweils mehreren Ethernet-Switches über eine durch zumindest zwei Koppelkanäle gebildete redundante Verbindung miteinander verbunden sind. Durch ein Programmiergerät wird bei einer Konfigurierung der redundanten Verbindung zugeordneter Koppelgeräte ein logischer Name für die redundante Verbindung jeweils in einem Speicher der Koppelgeräte hinterlegt. Die Koppelgeräte ermitteln in einer Netzwerkanlaufphase durch Verteilen von Sondertelegrammen, die den logischen Namen der redundanten Verbindung umfassen, zur selben redundanten Verbindung gehörige Verbindungspartner. Anhand eines Ordnungskriteriums legen sie fest, welcher Koppelkanal in einem störungsfreien Betrieb aktiviert bzw. deaktiviert ist.

Aus EP 2 413 538 B1 ist ein Verfahren zur redundanten Kommunikation in einem Kommunikationssystem bekannt, bei dem das Kommunikationssystem ein erstes und ein zweites Kommunikationsnetz umfasst, die über zumindest einen Kopplungsknoten miteinander verbunden sind. Dabei wird eine Rückübertragung von Daten, die aus dem ersten Kommunikationsnetz stammen, aus dem zweiten Kommunikationsnetz zurück in das erste Kommunikationsnetz auf Grund einer vor Übertragung definierten Information verhindert.

Die ältere europäische Patentanmeldung mit dem Anmeldeaktenzeichen 13186627.9 betrifft ein Verfahren zur Nachrichten-übermittlung in einem redundant betreibbaren industriellen Kommunikationsnetz mit zumindest einem ersten und einem zweiten Teilnetz mit Ringtopologie, die über eine Teilnetz-Kopplung miteinander verbunden sind. Dabei wählen Koppel-Kommunikationsgeräte anhand eines ihnen jeweils zugeordneten Prioritätskennwerts untereinander ein Koppel-Kommunikationsgerät aus, dessen Kopplungssteuerungseinheit aktiviert wird. Die anderen Koppel-Kommunikationsgeräte deaktivieren dagegen ihre Kopplungssteuerungseinheit. Ein erstes Koppel-Kommunikationsgerät des ersten Teilnetzes und ein erstes Koppel-Kommunikationsgerät des zweiten Teilnetzes tauschen untereinander Test-Nachrichten zur Detektion einer Unterbrechung zwischen den beiden ersten Koppel-Kommunikationsgeräten aus, während ein zweites Koppel-Kommunikationsgerät des ersten Teilnetzes und ein zweites Koppel-Kommunikationsgerät des zweiten Teilnetzes untereinander Test-Nachrichten zur Detektion einer Unterbrechung zwischen den beiden zweiten Koppel-Kommunikationsgeräten austauschen.

In US 7 602 706 B1 ist ein Verfahren zur gesicherten Kopplung von Teilnetzen mit jeweils einer Ring-Topologie beschrieben, bei dem ein erster Netzknoten demselben Teilnetz wie ein Koppel-Netzknoten zugeordnet ist und über eine Ring-Kopplung mit einem Partner-Netzknoten in einem anderen Teilnetz verbunden ist. Wenn der erste Netzknoten in einem aktiven Betriebsmodus ist und eine Nachricht über einen Ausfall der Ring-Kopplung oder des Partner-Netzknotens empfängt, sendet der erste Netzknoten eine Nachricht an den Koppel-Netzknoten, damit sich von einem Standby-Betriebsmodus in einen aktiven Betriebsmodus umschaltet, während sich der erste Netzknoten in einen Standby-Betriebsmodus umschaltet. Bei einem Übergang einer Ring-Kopplung zwischen einem aktiven Betriebsmodus und einem Standby-Betriebsmodus werden der Ring-Kopplung zugeordnete Pfadkosten geändert.

Bei einer MRP-Interconnection entsprechend IEC 62439-2 zur Kopplung von MRP-Ringnetzen können sich Probleme ergeben, wenn ein als MRP-Interconnection-Manager betriebener Koppel-Switch seinen Interconnection-Port hinsichtlich dessen Port-Zustandes, insbesondere Weiterleitung von Nutzdaten (Forwarding) oder Nicht-Weiterleitung von Nutzdaten (Blocking), nicht mehr steuern kann. Trotz ansonsten fehlerfreier Switching-Funktion des MRP-Interconnection-Managers kann es unter diesen Bedingungen zu einer Schleifenbildung an der MRP-Interconnection kommen. Im ungünstigsten Fall kann eine Schleifenbildung zu einem kompletten Kommunikationsausfall in und zwischen den MRP-Ringnetzen führen.

Der vorliegenden Erfindung liegt daher die Aufgabe zugrunde, ein Verfahren zur Datenübermittlung in einem redundant betreibbaren industriellen Kommunikationsnetz zu schaffen, das eine zuverlässige und fehlersichere Kopplung von zwei Teilnetzen mit Ringtopologie ermöglicht, und ein zur Durchführung des Verfahrens geeignetes Koppel-Kommunikationsgerät anzugeben.

Diese Aufgabe wird erfindungsgemäß durch ein Verfahren mit den in Anspruch 1 angegebenen Merkmalen sowie durch ein Koppel-Kommunikationsgerät mit den in Anspruch 10 angegebenen Merkmalen gelöst. Vorteilhafte Weiterbildungen der vorliegenden Erfindung sind in den abhängigen Ansprüchen angegeben.

Das erfindungsgemäße Verfahren ist zur Datenübermittlung in einem redundant betreibbaren industriellen Kommunikationsnetz vorgesehen, bei dem das industrielle Kommunikationsnetz zumindest ein erstes und ein zweites Teilnetz umfasst, die jeweils innerhalb einer Ringtopologie miteinander verbundene Kommunikationsgeräte umfassen. Die Kommunikationsgeräte weisen jeweils zumindest ein Koppelelement sowie einen ersten und einen zweiten Ring-Anschluss auf, die durch das Koppelelement schaltbar miteinander verbindbar sind. Für eine redundante Teilnetz-Kopplung sind ein erstes Koppel-Kommunikationsgerät des ersten Teilnetzes und ein erstes Koppel-Kommunikationsgerät des zweiten Teilnetzes über eine erste Koppel-Verbindung sowie ein zweites Koppel-Kommunikationsgerät des ersten Teilnetzes und ein zweites Koppel-Kommunikationsgerät des zweiten Teilnetzes über eine zweite Koppel-Verbindung miteinander verbunden. Dabei weisen die Koppel-Kommunikationsgeräte zusätzlich einen Koppel-Anschluss auf.

Erfindungsgemäß weisen die beiden zweiten Koppel-Kommunikationsgeräte jeweils eine aktivierte Kopplungssteuerungseinheit auf. Jede Kopplungssteuerungseinheit steuert eine Weiterleitung von Datagrammen mit Nutzdaten vom bzw. an den Koppel-Anschluss des jeweiligen zweiten Koppel-Kommunikationsgeräts in Abhängigkeit von einer detektierten Unterbrechung zwischen den beiden ersten Koppel-Kommunikationsgeräten. Jedes der zweiten Koppel-Kommunikationsgeräte überwacht die erste Koppel-Verbindung anhand von Verbindungsstatus-Datagrammen der ersten Koppel-Kommunikationsgeräte auf eine Unterbrechung. Dabei wird durch ein Verbindungsstatus-Datagramm eine am jeweiligen Koppel-Anschluss auf- oder abgebaute Verbindung angezeigt. Eine Unterbrechung der ersten Koppel-Verbindung kann beispielsweise auch durch einen Port-Fehler an einem ersten Koppel-Kommunikationsgerät verursacht sein. An den Ring-Anschlüssen zumindest eines der beiden zweiten Koppel-Kommunikationsgeräte empfangene Verbindungsstatus-Datagramme werden erfindungsgemäß über den Koppel-Anschluss des jeweiligen zweiten Koppel-Kommunikationsgeräts an den Koppel-Anschluss des jeweils anderen zweiten Koppel-Kommunikationsgeräts weitergeleitet.

Aufgrund autark voneinander agierenden Kopplungssteuerungseinheiten der zweiten Koppel-Kommunikationsgeräte kann auch bei einem nicht mehr steuerbaren Koppel-Anschluss-Zustand an einem der beiden zweiten Koppel-Kommunikationsgeräte durch eine kompensatorische Schaltmaßnahme am jeweils anderen zweiten Koppel-Kommunikationsgerät eine Schleifenfreiheit gewährleistet werden. Damit ist auch unter ungünstigen Bedingungen eine zuverlässige Kopplung von zwei Teilnetzen mit Ringtopologie möglich.

Entsprechend einer vorteilhaften Weiterbildung des erfindungsgemäßen Verfahrens versenden die zweiten Koppel-Kommunikationsgeräte bei Detektion einer Topologieänderung zwischen den beiden ersten Koppel-Kommunikationsgeräten jeweils ein Topologieänderung-Datagramm über ihre Ring-Anschlüsse und ihren Koppel-Anschluss. Dabei werden an den Koppel-Anschlüssen der beiden zweiten Koppel-Kommunikationsgeräte empfangene Topologieänderung-Datagramme über die Ring-Anschlüsse des jeweiligen zweiten Koppel-Kommunikationsgeräts weitergeleitet. Vorzugsweise schalten die ersten Koppel-Kommunikationsgeräte bei Empfang eines Topologieänderung-Datagramms jeweils nach Detektion einer an ihrem Koppel-Anschluss aufgebauten Verbindung ihren Koppel-Anschluss für Datagramme mit Nutzdaten in einen weiterleitenden Zustand, beispielsweise von "Blocking" nach "Forwarding".

Darüber hinaus können die Topologieänderung-Datagramme beispielsweise dazu genutzt werden, dass die Kommunikationsgeräte bei Empfang eines Topologieänderung-Datagramms jeweils ihre lokale Forwarding Database löschen. Ferner können innerhalb einer Ringtopologie als Medienredundanz-Manager (Media Redundancy Manager) betriebene Kommunikationsgeräte empfangene Topologieänderung-Datagramme, die der redundanten Teilnetz-Kopplung zugeordnet sind, in Topologieänderung-Datagramme umwandeln, die ihrem jeweiligen Teilnetz zugeordnet sind. Hierdurch kann sichergestellt werden, dass eine durch die Topologieänderung-Datagramme ausgelöste selbständige Umkonfigurierung der Kommunikationsgeräte in den über die redundante Teilnetz-Kopplung miteinander verbundenen Teilnetzen im wesentlichen synchron erfolgt.

Entsprechend einer besonders bevorzugten Ausgestaltung der vorliegenden Erfindung sind die Verbindungsstatus-Datagramme MRP_InLinkChange-Datenrahmen entsprechend IEC 62439-2, während die Topologieänderung-Datagramme MRP_InTopologieChange-Datenrahmen sind. Darüber hinaus werden die beiden zweiten Koppel-Kommunikationsgeräte vorzugsweise jeweils als Media Redundancy Interconnection Manager entsprechend IEC 62439-2 betrieben, insbesondere jeweils im Link Check Modus entsprechend IEC 62439-2. Damit kann die vorliegende Erfindung aufbauend auf einem etablierten Standard realisiert werden.

Insbesondere umfassen das erste und das zweite Teilnetz vorzugsweise jeweils zumindest ein Kommunikationsgerät mit einer aktivierten Überwachungs- und Steuerungseinheit. Diese Überwachungs- und Steuerungseinheit detektiert eine Unterbrechung innerhalb der jeweiligen Ringtopologie anhand durch das jeweilige Kommunikationsgerät versendeter und wieder empfangener Test-Datagramme. In Abhängigkeit von einer detektierten Unterbrechung steuert die Überwachungs- und Steuerungseinheit außerdem eine Weiterleitung von Datagrammen mit Nutzdaten zwischen den Ring-Anschlüssen des jeweiligen Kommunikationsgeräts. Dabei werden Datagramme innerhalb des ersten und des zweiten Teilnetzes vorzugsweise entsprechend Media Redundancy Protocol übermittelt.

Entsprechend einer weiteren vorteilhaften Ausgestaltung der vorliegenden Erfindung leiten die zweiten Koppel-Kommunikationsgeräte nur Verbindungsstatus-Datagramme über ihren jeweiligen Koppel-Anschluss weiter, die ihrer Teilnetz-Kopplung zugeordnet sind. Insbesondere erfolgt vorzugsweise nur eine Weiterleitung von MRP_InLinkChange-Frames mit übereinstimmender MRP-Interconnection-ID-Zuordnung.

Darüber hinaus steuern die Kopplungssteuerungseinheiten vorzugsweise unabhängig voneinander eine Weiterleitung von Datagrammen mit Nutzdaten vom bzw. an den Koppel-Anschluss des jeweiligen zweiten Koppel-Kommunikationsgeräts in Abhängigkeit von einer detektierten Unterbrechung zwischen den beiden ersten Koppel-Kommunikationsgeräten. Dabei überwachen die zweiten Koppel-Kommunikationsgeräte unabhängig voneinander die erste Koppel-Verbindung auf eine Unterbrechung. Insbesondere ermitteln beide zweiten Koppel-Kommunikationsgeräte bzw. Media Redundancy Interconnection Manager vorteilhafterweise unabhängig voneinander einen für ihren jeweiligen Koppel-Anschluss zu wählenden Status, beispielsweise "Forwarding" oder "Blocking". Auf diese Weise kann ein auch Ausfall bzw. eine Funktionseinschränkung eines Media Redundancy Interconnection Manager kompensiert werden. Für eine synchrone Umkonfigurierung der über die Teilnetz-Kopplung miteinander verbundenen Kommunikationsgeräte bei einer Topologieänderung werden vorzugsweise sämtliche an den Ring-Anschlüssen der beiden zweiten Koppel-Kommunikationsgeräte empfangenen Verbindungsstatus-Datagramme über den Koppel-Anschluss des jeweiligen zweiten Koppel-Kommunikationsgeräts an den Koppel-Anschluss des jeweils anderen zweiten Koppel-Kommunikationsgeräts weitergeleitet.

Das erfindungsgemäße Koppel-Kommunikationsgerät ist zur Durchführung eines Verfahrens zur Datenübermittlung in einem redundant betreibbaren industriellen Kommunikationsnetz entsprechend vorangehenden Ausführungen vorgesehen. Dabei umfasst das Kommunikationsnetz zumindest ein erstes und ein zweites Teilnetz, die jeweils innerhalb einer Ringtopologie miteinander verbundene Kommunikationsgeräte umfassen. Das erfindungsgemäße Koppel-Kommunikationsgerät weist zumindest ein Koppelelement sowie einen ersten und einen zweiten Ring-Anschluss und einen Koppel-Anschluss auf, die durch das Koppelelement schaltbar miteinander verbindbar sind.

Erfindungsgemäß ist eine aktivierbare Kopplungssteuerungseinheit vorgesehen, die für eine Steuerung einer Weiterleitung von Datagrammen mit Nutzdaten vom bzw. an den Koppel-Anschluss in Abhängigkeit von einer detektierten Unterbrechung zwischen zwei Koppel-Kommunikationsgeräten ausgestaltet und eingerichtet ist. Außerdem ist das erfindungsgemäße Koppel-Kommunikationsgerät dafür ausgestaltet und eingerichtet, eine Verbindung zwischen zwei Koppel-Kommunikationsgeräten anhand von Verbindungsstatus-Datagrammen dieser Koppel-Kommunikationsgeräte auf eine Unterbrechung zu überwachen. Ein Verbindungsstatus-Datagramm zeigt dabei eine am jeweiligen Koppel-Anschluss auf- oder abgebaute Verbindung an. Darüber hinaus ist das Koppel-Kommunikationsgerät dafür ausgestaltet und eingerichtet, an den Ring-Anschlüssen empfangene Verbindungsstatus-Datagramme über den Koppel-Anschluss an einen Koppel-Anschluss eines anderen Koppel-Kommunikationsgeräts weiterzuleiten. Vorzugsweise umfasst das Koppel-Kommunikationsgerät einen Switch oder eine Bridge, so dass zur Realisierung des erfindungsgemäßen Koppel-Kommunikationsgeräts auf bereits bestehende Netzinfrastrukturgeräte zurückgegriffen werden kann.

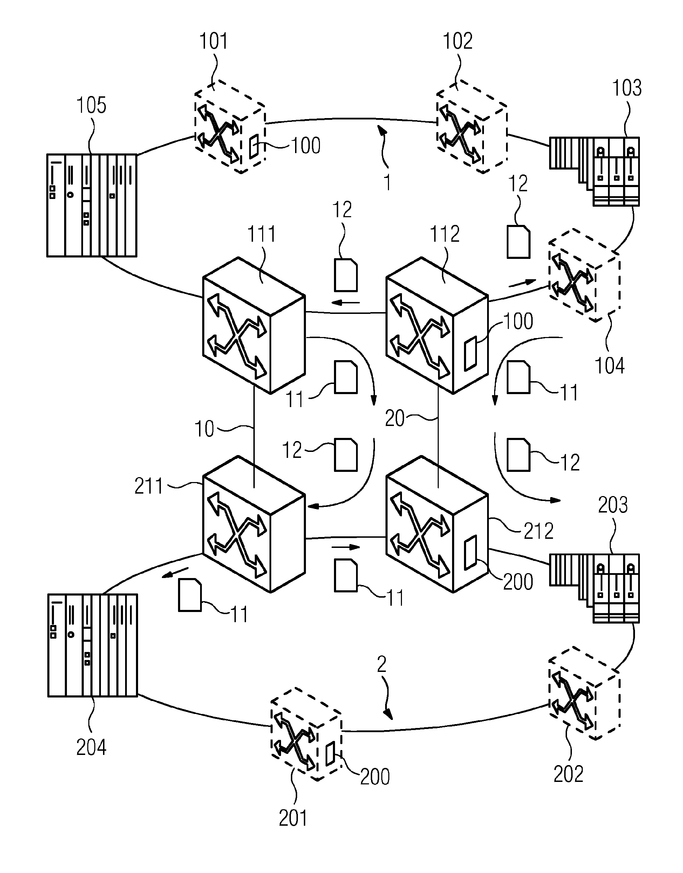

Die vorliegende Erfindung wird nachfolgend an einem Ausführungsbeispiel anhand der Zeichnung näher erläutert. Es zeigt die
- Figur: ein industrielles Kommunikationsnetz mit zwei Teilnetzen, die jeweils innerhalb einer Ringtopologie miteinander verbundene Kommunikationsgeräte umfassen, und mit 4 Koppel-Kommunikationsgeräten für eine redundante Teilnetz-Kopplung.

Das in der Figur dargestellte industrielle Kommunikationsnetz umfasst zwei MRP-Teilnetznetze 1, 2, die über 4 Koppel-Switches 111-112, 211-212 redundant miteinander gekoppelt sind. Innerhalb der beiden MRP-Teilnetze 1,2, die jeweils mehrere innerhalb einer Ringtopologie miteinander verbundene Kommunikationsgeräte 101-105, 111-112, 201-205, 211-212 umfassen, werden Datagramme entsprechend Media Redundancy Protocol (MRP) übermittelt. Die Kommunikationsgeräte 101-105, 111-112, 201-205, 211-212 weisen im vorliegenden Ausführungsbeispiel jeweils eine Switch- bzw. Bridge-Funktionalität sowie zumindest einen ersten und zweiten Ring-Anschluss und einen Backplane-Switch auf, durch den die Ring-Anschlüsse schaltbar miteinander verbindbar sind. Die Koppel-Switches 111-112, 211-212 weisen zusätzlich jeweils einen Koppel-Anschluss für eine redundante Teilnetz-Kopplung auf. Die redundante Teilnetz-Kopplung umfasst eine erste Koppel-Verbindung 10 und eine zweite zu dieser redundante Koppel-Verbindung 20. Über die erste Koppel-Verbindung 10 sind ein erster Koppel-Switch 111 des ersten MRP-Teilnetzes 1 und ein erster Koppel-Switch 211 des zweiten MRP-Teilnetzes 2 miteinander verbunden, während die zweite Koppel-Verbindung 20 einen zweiten Koppel-Switch 112 des ersten MRP-Teilnetzes 1 und einen zweiten Koppel-Switch 212 des zweiten MRP-Teilnetzes 2 miteinander verbindet.

Im ersten und zweiten MRP-Teilnetz 1, 2 wird jeweils ein Kommunikationsgerät 101, 201 als Medienredundanz-Manager (Media Redundancy Manager) betrieben. Hierzu umfassen die als Medienredundanz-Manager betriebenen Kommunikationsgeräte 101, 201 jeweils eine aktivierte Überwachungs- und Steuerungseinheit 100, 200. Diese Überwachungs- und Steuerungseinheit 100, 200 detektiert eine Unterbrechung innerhalb der jeweiligen Ring-topologie anhand durch das jeweilige Kommunikationsgerät 101, 201 versendeter und wieder empfangener Test-Datagramme. Darüber hinaus steuert die Überwachungs- und Steuerungseinheit 100, 200 eine Weiterleitung von Datagrammen mit Nutzdaten zwischen den Ring-Anschlüssen des jeweiligen Kommunikationsgeräts 101, 201 in Abhängigkeit von einer detektierten Unterbrechung.

Grundsätzlich können auch die übrigen Kommunikationsgeräte 102-105, 111-112, 202-205, 211-212 als Medienredundanz-Manager betrieben werden, sofern sie eine aktivierbare Überwachungs- und Steuerungseinheit aufweisen. Haben mehrere Kommunikationsgeräte innerhalb einer Ringtopologie eine entsprechende Funktionalität, so wird unter diesen Kommunikationsgerät in einem Auswahlverfahren bestimmt, welches Kommunikationsgerät als Medienredundanz-Manager betrieben wird, bzw. welches Kommunikationsgerät seine Überwachungs- und Steuerungseinheit aktiviert. Die Kommunikationsgeräte 101-105, 111-112, 201-205, 211-212 können ferner einem industriellen Automatisierungsgerät, wie einer Speicherprogrammierbaren Steuerung oder einem Feldgerät, zugeordnet oder in ein industrielles Automatisierungsgerät integriert sein. Entsprechend der Figur sind im vorliegenden Ausführungsbeispiel die Kommunikationsgeräte 103, 105, 203, 204 in eine Speicherprogrammierbare Steuerung bzw. in ein dezentrales Peripheriegerät integriert.

Während die beiden ersten Koppel-Switches 111, 211 im vorliegenden Ausführungsbeispiel als MRP Interconnection Clients (MIC) entsprechend IEC 62439-2 betrieben werden, arbeiten die beiden zweiten Koppel-Switches 112, 212 als MRP Interconnection Manager (MIM) entsprechend IEC 62439-2. Hierzu weisen die beiden zweiten Koppel-Switches 112, 212 jeweils eine aktivierte Kopplungssteuerungseinheit 100, 200 auf. Dabei steuern die Kopplungssteuerungseinheiten 100, 200 jeweils unabhängig voneinander eine Weiterleitung von Datagrammen mit Nutzdaten vom bzw. an den Koppel-Anschluss des jeweiligen zweiten Koppel-Switches 112, 212 in Abhängigkeit von einer detektierten Unterbrechung zwischen den beiden ersten Koppel-Switches 111, 211.

Darüber hinaus überwachen die beiden als MRP Interconnection Manager betriebenen Koppel-Switches 112, 212 jeweils unabhängig voneinander die erste Koppel-Verbindung 100 anhand von IEC 62439-2 entsprechenden MRP_InLinkChange-Datenrahmen 11 der MRP Interconnection Clients auf eine Unterbrechung. Hierbei werden die beiden zweiten Koppel-Switches 112, 212 jeweils im Link Check (LC) Modus entsprechend IEC 62439-2 betrieben. Durch die MRP_InLinkChange-Datenrahmen 11 werden am jeweiligen Koppel-Anschluss auf- oder abgebaute Verbindungen (Link Up, Link Down) angezeigt.

Sämtliche an den Ring-Anschlüssen der beiden zweiten Koppel-Switches 112, 212 empfangene MRP_InLinkChange-Datenrahmen 11 werden über den Koppel-Anschluss des jeweiligen zweiten Koppel-Switches 112, 212 an den Koppel-Anschluss des jeweils anderen zweiten Koppel-Switches 212, 112 weitergeleitet. Dabei leiten die beiden zweiten Koppel-Switches 112, 212 jedoch nur MRP_InLinkChange-Datenrahmen 11 weiter, die ihrer Teilnetz-Kopplung zugeordnet sind. Hierzu wird beispielsweise eine in den MRP_InLinkChange-Datenrahmen 11 angegebene InterconnectionID ausgewertet.

Die beiden zweiten Koppel-Switches 112, 212 versenden bei Detektion einer Topologieänderung zwischen den beiden ersten Koppel-Switches 111, 211 jeweils einen MRP_InTopologieChange-Datenrahmen 12 über ihre Ring-Anschlüsse und ihren Koppel-Anschluss. An einem Koppel-Anschluss eines der beiden zweiten Koppel-Switches empfangene MRP_InTopologieChange-Datenrahmen 12 werden entsprechend dem vorliegenden Ausführungsbeispiel über die Ring-Anschlüsse des jeweiligen zweiten Koppel-Switches 112, 212 weitergeleitet. Bei Empfang eines MRP_InTopologieChange-Datenrahmens 12 schalten die ersten Koppel-Switches 111, 211 jeweils nach Detektion einer an ihrem Koppel-Anschluss aufgebauten Verbindung ihren Koppel-Anschluss für Datagramme mit Nutzdaten in einen weiterleitenden Zustand (Forwarding).

Darüber hinaus werden die MRP_InTopologieChange-Datenrahmen 12 im vorliegenden Ausführungsbeispiel durch die als Medienredundanz-Manager betriebene Kommunikationsgeräte 101, 201 in MRP_TopologieChange-Datenrahmen für das jeweilige MRP-Teilnetz 1, 2 umgewandelt. Bei Empfang eines Topologieänderung-Datagramms, wie MRP_InTopologieChange-Datenrahmen oder MRP_TopologieChange-Datenrahmen, konfigurieren sich die Kommunikationsgeräte 101-105, 111-112, 201-205, 211-212 jeweils selbständig um und löschen dabei beispielsweise ihre lokale Forwarding Database löschen. Durch die beschriebenen Weiterleitung der MRP_InTopologieChange-Datenrahmen 12 und deren Umwandlung in MRP_TopologieChange-Datenrahmen wird insbesondere eine im wesentlichen synchrone Umkonfigurierung in den über die redundante Teilnetz-Kopplung miteinander verbundenen MRP-Teilnetzen 1, 2 ausgelöst.

## Patentansprüche

1. Verfahren zur Datenübermittlung in einem redundant betreibbaren industriellen Kommunikationsnetz, bei dem
- das industrielle Kommunikationsnetz zumindest ein erstes und ein zweites Teilnetz umfasst, die jeweils innerhalb einer Ringtopologie miteinander verbundene Kommunikationsgeräte umfassen, die jeweils zumindest ein Koppelelement sowie einen ersten und einen zweiten Ring-Anschluss aufweisen, die durch das Koppelelement schaltbar miteinander verbindbar sind,
- ein erstes Koppel-Kommunikationsgerät des ersten Teilnetzes und ein erstes Koppel-Kommunikationsgerät des zweiten Teilnetzes über eine erste Koppel-Verbindung sowie ein zweites Koppel-Kommunikationsgerät des ersten Teilnetzes und ein zweites Koppel-Kommunikationsgerät des zweiten Teilnetzes über eine zweite Koppel-Verbindung für eine redundante Teilnetz-Kopplung miteinander verbunden sind, wobei die Koppel-Kommunikationsgeräte zusätzlich einen Koppel-Anschluss aufweisen,
**dadurch gekennzeichnet, dass**
- die beiden zweiten Koppel-Kommunikationsgeräte jeweils eine aktivierte Kopplungssteuerungseinheit aufweisen, wobei jede Kopplungssteuerungseinheit eine Weiterleitung von Datagrammen mit Nutzdaten vom und/oder an den Koppel-Anschluss des jeweiligen zweiten Koppel-Kommunikationsgeräts in Abhängigkeit von einer detektierten Unterbrechung zwischen den beiden ersten Koppel-Kommunikationsgeräten steuert,
- jedes der zweiten Koppel-Kommunikationsgeräte die erste Koppel-Verbindung anhand von Verbindungsstatus-Datagrammen der ersten Koppel-Kommunikationsgeräte auf eine Unterbrechung überwacht, wobei durch ein Verbindungsstatus-Datagramm eine am jeweiligen Koppel-Anschluss auf-oder abgebaute Verbindung angezeigt wird,
- an den Ring-Anschlüssen zumindest eines der beiden zweiten Koppel-Kommunikationsgeräte empfangene Verbindungsstatus-Datagramme über den Koppel-Anschluss des jeweiligen zweiten Koppel-Kommunikationsgeräts an den Koppel-Anschluss des jeweils anderen zweiten Koppel-Kommunikationsgeräts weitergeleitet werden.

2. Verfahren nach Patentanspruch 1,
bei dem die zweiten Koppel-Kommunikationsgeräte bei Detektion einer Topologieänderung zwischen den beiden ersten Koppel-Kommunikationsgeräten jeweils ein Topologieänderung-Datagramm über ihre Ring-Anschlüsse und ihren Koppel-Anschluss versenden, und bei dem an einem Koppel-Anschluss eines der beiden zweiten Koppel-Kommunikationsgeräte empfangene Topologieänderung-Datagramme über die Ring-Anschlüsse des jeweiligen zweiten Koppel-Kommunikationsgeräts weitergeleitet werden.

3. Verfahren nach Patentanspruch 2,
bei dem die ersten Koppel-Kommunikationsgeräte bei Empfang eines Topologieänderung-Datagramms jeweils nach Detektion einer an ihrem Koppel-Anschluss aufgebauten Verbindung ihren Koppel-Anschluss für Datagramme mit Nutzdaten in einen weiterleitenden Zustand schalten.

4. Verfahren nach einem der Patentansprüche 2 oder 3,
bei dem die Kommunikationsgeräte bei Empfang eines Topologieänderung-Datagramms jeweils ihre lokale Forwarding Database löschen.

5. Verfahren nach einem der Patentansprüche 2 bis 4,
bei dem die Verbindungsstatus-Datagramme MRP_InLinkChange-Datenrahmen entsprechend IEC 62439-2 sind, und bei dem die Topologieänderung-Datagramme MRP_InTopologieChange-Datenrahmen sind.

6. Verfahren nach einem der Patentansprüche 1 bis 5,
bei dem die beiden zweiten Koppel-Kommunikationsgeräte jeweils als Media Redundancy Interconnection Manager entsprechend IEC 62439-2 betrieben werden, und bei dem die beiden zweiten Koppel-Kommunikationsgeräte jeweils im Link Check Modus entsprechend IEC 62439-2 betrieben werden.

7. Verfahren nach einem der Patentansprüche 1 bis 6,
bei dem das erste und das zweite Teilnetz jeweils zumindest ein Kommunikationsgerät mit einer aktivierten Überwachungs-und Steuerungseinheit umfassen, die eine Unterbrechung innerhalb der jeweiligen Ringtopologie anhand durch das jeweilige Kommunikationsgerät versendeter und wieder empfangener Test-Datagramme detektiert sowie eine Weiterleitung von Datagrammen mit Nutzdaten zwischen den Ring-Anschlüssen des jeweiligen Kommunikationsgeräts in Abhängigkeit von einer detektierten Unterbrechung steuert.

8. Verfahren nach einem der Ansprüche 1 bis 7,
bei dem Datagramme innerhalb des ersten und des zweiten Teilnetzes entsprechend Media Redundancy Protocol übermittelt werden.

9. Verfahren nach einem der Ansprüche 1 bis 8,
bei dem die zweiten Koppel-Kommunikationsgeräte nur Verbindungsstatus-Datagramme über ihren jeweiligen Koppel-Anschluss weiterleiten, die ihrer Teilnetz-Kopplung zugeordnet sind.

10. Verfahren nach einem der Ansprüche 1 bis 9,
bei dem die Kopplungssteuerungseinheiten unabhängig voneinander eine Weiterleitung von Datagrammen mit Nutzdaten vom und/oder an den Koppel-Anschluss des jeweiligen zweiten Koppel-Kommunikationsgeräts in Abhängigkeit von einer detektierten Unterbrechung zwischen den beiden ersten Koppel-Kommunikationsgeräten steuern, und bei dem die zweiten Koppel-Kommunikationsgeräte unabhängig voneinander die erste Koppel-Verbindung auf eine Unterbrechung überwachen.

11. Verfahren nach einem der Ansprüche 1 bis 10,
bei dem sämtliche an den Ring-Anschlüssen der beiden zweiten Koppel-Kommunikationsgeräte empfangenen Verbindungsstatus-Datagramme über den Koppel-Anschluss des jeweiligen zweiten Koppel-Kommunikationsgeräts an den Koppel-Anschluss des jeweils anderen zweiten Koppel-Kommunikationsgeräts weitergeleitet werden.

12. Koppel-Kommunikationsgerät zur Durchführung eines Verfahrens zur Datenübermittlung in einem redundant betreibbaren industriellen Kommunikationsnetz, das zumindest ein erstes und ein zweites Teilnetz umfasst, die jeweils innerhalb einer Ringtopologie miteinander verbundene Kommunikationsgeräte umfassen, nach einem der Ansprüche 1 bis 11, bei dem
- das Koppel-Kommunikationsgerät zumindest ein Koppelelement sowie einen ersten und einen zweiten Ring-Anschluss und einen Koppel-Anschluss aufweist, die durch das Koppelelement schaltbar miteinander verbindbar sind,
**dadurch gekennzeichnet, dass**
- eine aktivierbare Kopplungssteuerungseinheit vorgesehen ist, die für eine Steuerung einer Weiterleitung von Datagrammen mit Nutzdaten vom und/oder an den Koppel-Anschluss in Abhängigkeit von einer detektierten Unterbrechung zwischen zwei Koppel-Kommunikationsgeräten ausgestaltet und eingerichtet ist,
- das Koppel-Kommunikationsgerät dafür ausgestaltet und eingerichtet ist, eine Verbindung zwischen zwei Koppel-Kommunikationsgeräten anhand von Verbindungsstatus-Datagrammen dieser Koppel-Kommunikationsgeräte auf eine Unterbrechung zu überwachen, wobei ein Verbindungsstatus-Datagramm eine am jeweiligen Koppel-Anschluss aufoder abgebaute Verbindung anzeigt,
- das Koppel-Kommunikationsgerät dafür ausgestaltet und eingerichtet ist, an den Ring-Anschlüssen empfangene Verbindungsstatus-Datagramme über den Koppel-Anschluss an einen Koppel-Anschluss eines anderen Koppel-Kommunikationsgeräts weiterzuleiten.

13. Koppel-Kommunikationsgerät nach Anspruch 10,
bei dem das Koppel-Kommunikationsgerät einen Switch oder eine Bridge umfasst.
